(19) **Europäisches Patentamt / European Patent Office / Office européen des brevets**

(11) **EP 4 761 427 A1**

(12) **EUROPEAN PATENT APPLICATION**
published in accordance with Art. 153(4) EPC

(43) Date of publication:
**17.06.2026 Bulletin 2026/25**

(21) Application number: **24852400.1**

(22) Date of filing: **09.08.2024**

(51) International Patent Classification (IPC):
**H04W 72/23** $^{(2023.01)}$       **H04W 72/0453** $^{(2023.01)}$
**H04W 48/10** $^{(2009.01)}$       **H04L 5/00** $^{(2006.01)}$

(52) Cooperative Patent Classification (CPC):
**H04L 5/00; H04W 48/10; H04W 72/0453;
H04W 72/23**

(86) International application number:
**PCT/KR2024/011884**

(87) International publication number:
**WO 2025/034047 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 US 202363532063 P
11.08.2023 KR 20230105246**

(71) Applicant: **LG Electronics Inc.
Yeongdeungpo-gu
Seoul 07336 (KR)**

(72) Inventors:
• **KIM, Jaehyung**
  **Seoul 06772 (KR)**
• **YANG, Suckchel**
  **Seoul 06772 (KR)**
• **LEE, Youngdae**
  **Seoul 06772 (KR)**
• **LEE, Sunghoon**
  **Seoul 06772 (KR)**

(74) Representative: **Plasseraud IP
104 Rue de Richelieu
CS92104
75080 Paris Cedex 02 (FR)**

(54) **METHOD AND APPARATUS FOR TRANSMITTING AND RECEIVING CONTROL CHANNEL**

(57)    A method according to an embodiment of the present specification comprises the steps of: receiving an SS/PBCH block; and receiving a PDCCH on the basis of a CORESET. The CORESET is acquired through interleaved mapping on the basis that the frequency domain size of the CORESET determined on the basis of a configuration related to the CORESET is related to a channel bandwidth that is less than 5 MHz. A shift value related to the interleaved mapping is determined on the basis of a defined shift value.

【FIG. 14】

```
          ┌─────────┐
          │  Start  │
          └─────────┘
               │
               ▼
   ┌───────────────────────────┐
   │  Receive an SS/PBCH block │──── S1410
   └───────────────────────────┘
               │
               ▼
   ┌───────────────────────────┐
   │     Receive a PDCCH       │──── S1420
   └───────────────────────────┘
               │
               ▼
          ┌─────────┐
          │   End   │
          └─────────┘
```

EP 4 761 427 A1

**Description**

[Technical Field]

The present disclosure relates to method and apparatus for transmitting and receiving control channel.

[Background Art]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

In order to efficiently support various use cases in 5G in terms of cost/complexity, a maximum bandwidth of newly introduced UE types may be reduced. For example, the maximum bandwidth may be reduced to 3 MHz.

If the maximum bandwidth is reduced (e.g., 3 MHz), puncturing may be applied to the Control Resource SET (CORESET) to fit the reduced bandwidth.

[Disclosure]

[Technical Problem]

Interleaved-mapping is applied to a CORESET #0. According to conventional operations, $n_{shift}$ used for the mapping is fixed to a cell ID. Therefore, as described above, when a CORESET is obtained based on puncturing, a problem occurs in that the number of Control Channel Elements (CCEs) through which a PDCCH is transmitted varies.

An object of the present disclosure is to propose a method for addressing the problem above.

Technical objects to be achieved by the present disclosure are not limited to the aforementioned technical objects, and other technical objects not described above may be evidently understood by a person having ordinary skill in the art to which the present disclosure pertains from the following description.

[Technical Solution]

A method performed by a user equipment according to one embodiment of the present disclosure includes receiving a Synchronization Signal/Physical Broadcast Channel (SS/PBCH) block and receiving a Physical Downlink Control Channel (PDCCH) based on a COntrol REsource SET (CORESET).

Based on the frequency domain size of the CORESET determined based on the configuration related to the CORESET being related to a channel bandwidth smaller than 5 MHz, the CORESET is obtained based on interleaved mapping.

A shift value related to the interleaved mapping is determined based on a defined value.

The defined value may be configured based on broadcast signaling.

The configuration related to the CORESET may be indicated based on the broadcast signaling. The configuration related to the CORESET may be one of configurations defined in a table.

Each of the configurations may include i) the defined value, ii) the number of Resource Blocks (RBs) related to the frequency domain size, iii) the number of symbols, and iv) an offset.

The defined value may be determined based on puncturing related to the CORESET.

Resource Blocks (RBs) forming the CORESET may be obtained by the puncturing of one or more RBs among RBs based on the frequency domain size.

The defined value may be a value based on a portion of the obtained RBs.

The defined value may be a value that is changed based on a time-varying unit.

An initial value of the defined value may be i) a value set based on broadcast signaling or ii) a value determined based on puncturing related to the CORESET.

The time-varying unit may be based on i) at least one slot or ii) periodicity related to a search space.

The shift value may be determined as i) the defined value or ii) a value obtained by adding the defined value to a cell ID.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories. The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure includes transmitting a Synchronization Signal/Physical Broadcast Channel (SS/PBCH) block and transmitting a Physical Downlink Control CHannel (PDCCH) based on a COntrol REsource SET (CORESET).

Based on the frequency domain size of the CORESET determined based on the configuration related to the CORESET being related to a channel bandwidth smaller than 5 MHz, the CORESET is obtained based on interleaved mapping.

A shift value related to the interleaved mapping is determined based on a defined value.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[Advantageous Effects]

According to an embodiment of the present disclosure, interleaved mapping applied to a CORESET #0 is performed based on a defined value. Accordingly, as puncturing is applied to a CORESET in a narrowband, variation in PDCCH transmission and reception performance for each cell may be minimized.

Also, by resolving issues that may occur when supporting narrowband UE/spectrum scenarios, the present disclosure may contribute to expanding use case scenarios of an NR system.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[Description of Drawings]

FIG. 1 illustrates an example of a frame structure in an NR system.
FIG. 2 illustrates an example of a resource grid in NR.
FIG. 3 illustrates physical channels and general signal transmission used in a 3GPP system.
FIG. 4 is a diagram illustrating an SSB structure to which a method proposed in the present disclosure is applicable.
FIG. 5 illustrates SSB transmission to which a method proposed in the present disclosure is applicable.
FIG. 6 is a flow chart illustrating reception of DL signals/channels in an initial access procedure to which a method according to an embodiment of the present disclosure is applicable.
FIG. 7 illustrates an example of a time-frequency structure of SSB according to an embodiment of the present disclosure.
FIG. 8 illustrates an example of a frequency resource domain for PBCH transmission/reception according to an embodiment of the present disclosure.
FIG. 9 illustrates an example of a frequency resource domain for PBCH transmission/reception according to another embodiment of the present disclosure.
FIG. 10 illustrates a frequency domain related to PDCCH transmission and reception.
FIG. 11 illustrates point A according to a conventional method.
FIG. 12 illustrates point A according to an embodiment of the present disclosure.
FIG. 13 illustrates CORESET #0 according to an embodiment of the present disclosure.
FIG. 14 is a flowchart illustrating a method performed by a user equipment according to an embodiment of the present disclosure.

FIG. 15 is a flowchart illustrating a method performed by a base station according to another embodiment of the present disclosure.

FIG. 16 illustrates configuration of a first device and a second device according to an embodiment of the present disclosure.

[Mode for Invention]

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system.

Matters disclosed in a standard document opened before the disclosure may be referred to for a background art, terms, omissions, etc., used for describing the disclosure. For example, the following documents may be referred to.

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System

- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

## New Rat (NR) Numerology and Frame Structure

In the NR system, multiple numerologies may be supported. The numerologies may be defined by subcarrier spacing and a cyclic prefix (CP) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1. $\mu$ for a bandwidth part and the cyclic prefix are obtained from RRC parameters provided by the BS.

[Table 1]

| $\mu$ | $\triangle f = 2^{\mu}*15$ [kHz] | Cyclic Prefix (CP) |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges FR1 and FR2. FR1 may denote sub 6 GHz range, and FR2 may denote above 6 GHz range and may mean millimeter wave (mmW).

Table 2 below shows an example of definition of the NR frequency band.

[Table 2]

| Frequency Range Designation | Corresponding Frequency Range | Subcarrier Spacing |
|---|---|---|
| FR1 | 450MHz - 6000MHz | 15, 30, 60kHz |

(continued)

| Frequency Range Designation | Corresponding Frequency Range | Subcarrier Spacing |
|---|---|---|
| FR2 | 24250MHz - 52600MHz | 60, 120, 240kHz |

Regarding a frame structure in the NR system, a size of various fields in the time domain is expressed as a multiple of a time unit of $T_s = 1/\Delta f_{max} \cdot N_f$. In this case, $\Delta f_{max} = 480 \cdot 10^3$, and $N_f = 4096$. DL and UL transmission is configured as a radio frame having a section of $T_f = (\Delta f_{max} N_f / 100) \cdot T_s = 10$ms. The radio frame is composed of ten subframes each having a section of $T_{sf} = (\Delta f_{max} N_f / 1000) \cdot T_s = 1$ ms. In this case, there may be a set of UL frames and a set of DL frames.

Uplink frame number $i$ for transmission from a user equipment (UE) shall start $T_{TA} = N_{TA} T_s$ before the start of a corresponding downlink frame at the corresponding UE.

Regarding the numerology $\mu$, slots are numbered in increasing order of $n_s^\mu \in \left\{ 0, ..., N_{subframe}^{slots, \mu} - 1 \right\}$ within a subframe and are numbered in increasing order of $n_{s,f}^\mu \in \left\{ 0, ..., N_{frame}^{slots, \mu} - 1 \right\}$ within a radio frame. One slot consists of consecutive OFDM symbols of $N_{symb}^\mu$, and $N_{symb}^\mu$ is determined depending on a numerology used and slot configuration. The start of slots $n_s^\mu$ in a subframe is aligned in time with the start of OFDM symbols $n_s^\mu N_{symb}^\mu$ in the same subframe.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame, \mu}$ of slots per radio frame, and the number $N_{slot}^{subframe, \mu}$ of slots per subframe in a normal CP. Table 4 represents the number of OFDM symbols per slot, the number of slots per radio frame, and the number of slots per subframe in an extended CP.

[Table 3]

[Table 4]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

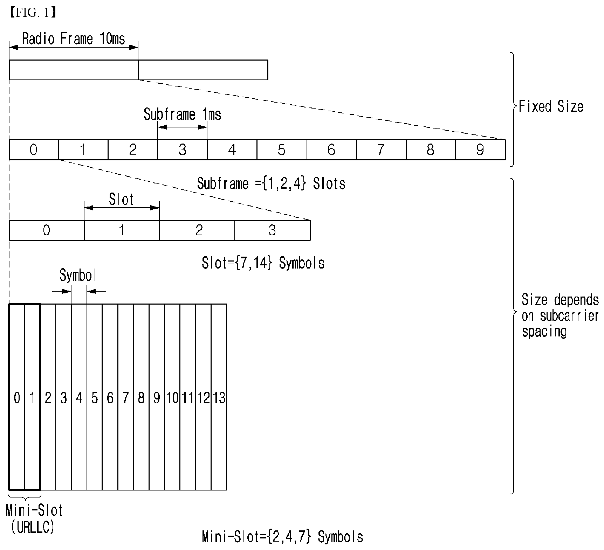

FIG. 1 illustrates an example of a frame structure in a NR system. FIG. 1 is merely for convenience of explanation

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

and does not limit the scope of the disclosure.

In Table 4, in case of $\mu = 2$, i.e., as an example in which a subcarrier spacing (SCS) is 60 kHz, one subframe (or frame) may include four slots with reference to Table 3, and one subframe = {1, 2, 4} slots shown in FIG. 1, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

The physical resources that may be considered in the NR system are described in detail below.

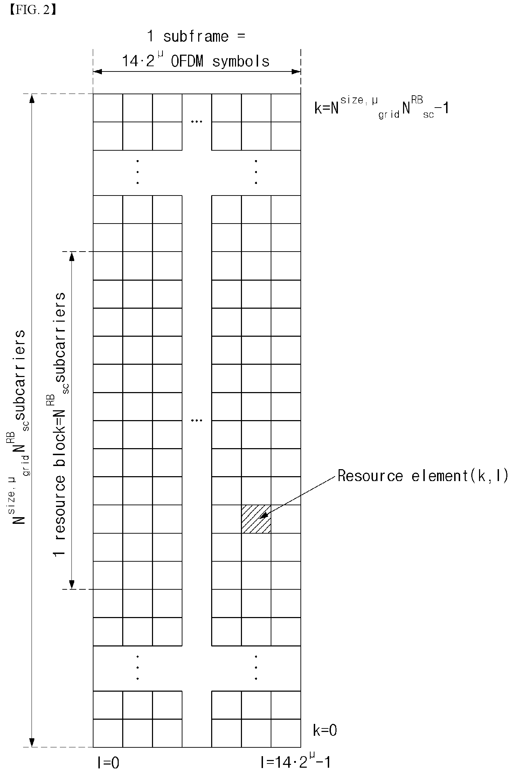

FIG. 2 illustrates an example of a resource grid supported in NR.

Referring to FIG. 2, for each subcarrier spacing configuration and carrier, a resource grid of $N_{grid}^{size,\mu} * N_{sc}^{RB}$ subcarriers and $14 \cdot 2^{\mu}$ OFDM symbols is defined, where $N_{grid}^{size,\mu}$ is indicated by RRC signaling from the BS. $N_{grid}^{size,\mu}$ may change between uplink and downlink as well as the subcarrier spacing configuration $\mu$.

Each element of the resource grid for the numerology $\mu$ and the antenna port p is called a resource element and is uniquely identified by an index pair $(k,\bar{l})$, where $k = 0,..., N_{RB}^{\mu} N_{sc}^{RB} - 1$ is an index on a frequency domain, and $\bar{l} = 0,...,2^{\mu} N_{symb}^{(\mu)} - 1$ refers to a location of a symbol in a subframe. The index pair $(k,l)$ is used to refer to a resource element in a slot, where $l = 0,...,N_{symb}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$. Further, a physical resource block is defined as $N_{sc}^{RB} = 12$ consecutive subcarriers in the frequency domain.

Considering that the UE may not be able to support a wide bandwidth to be supported in the NR system at one time, the UE may be configured to operate in a part of a frequency bandwidth of a cell (hereinafter, referred to as a bandwidth part (BWP)).

Resource blocks of the NR system include physical resource blocks defined in the bandwidth part and common resource blocks that are numbered upward from 0 in a frequency domain for the subcarrier spacing configuration $\mu$.

Point A serves as a common reference point of a resource block grid and may be obtained as follows.

- offsetToPointA for a PCell downlink represents a frequency offset between point A and the lowest subcarrier of the lowest resource block that overlaps with the SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents the frequency-location of point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{CRB}^{\mu}$ in the frequency domain and resource elements (k, 1) for the subcarrier spacing configuration $\mu$ may be given by the following Equation 1.

【Equation 1】

$$n_{CRB}^{\mu} = \left\lfloor \frac{k}{N_{sc}^{RB}} \right\rfloor$$

Here, k may be defined relative to point A so that k = 0 corresponds to a subcarrier centered around point A.

Physical resource blocks are defined within a bandwidth part (BWP) and are numbered from 0 to $N_{BWP,i}^{size} - 1$, where i is a number of the BWP. A relation between the physical resource block $n_{PRB}$ in BWP, i and the common resource block $n_{CRB}$ may be given by the following Equation 2.

【Equation 2】

Here, $N_{BWP,i}^{start}$ may be the common resource block where the BWP starts relative to the common resource block 0.

$$n_{\mathrm{CRB}} = n_{\mathrm{PRB}} + N_{\mathrm{BWP},i}^{\mathrm{start}}$$

**Bandwidth Part (BWP)**

In the NR system, up to 400 MHz can be supported per one carrier. If a UE operating in such a wideband carrier is always operated with a radio frequency (RF) module for all carriers turned on, battery consumption by the UE may increase. Alternatively, considering several use cases (e.g., eMBB, URLLC, mMTC, V2X, etc.) that are operated in one wideband carrier, different numerologies (e.g., subcarrier spacing) may be supported for each frequency band in the corresponding carrier. Alternatively, a capability for a maximum bandwidth may be different for each UE. Considering this, a base station (BS) may indicate the UE to operate only in a partial bandwidths rather than the entire bandwidth of a wideband carrier, and the partial bandwidth is defined as a bandwidth part (BWP). The BWP in the frequency domain is a subset of continuous common resource blocks defined for numerology μi within a bandwidth part i on the carrier, and one numerology (e.g., subcarrier spacing, CP length, slot/mini-slot duration) may be configured.

The BS may configure one or more BWPs within one carrier configured for the UE. Alternatively, if UEs are concentrated on a specific BWP, some UEs may be shifted to different BWPs for load balancing. Alternatively, both BWPs may be configured in the same slot excluding some center spectrums of the entire bandwidth considering frequency domain inter-cell interference cancellation between contiguous cells, etc. That is, the BS can configure at least one DL/UL BWP to a UE associated with the wideband carrier, can activate at least one DL/UL BWP of configured DL/UL BWP(s) at a specific time (by L1 signaling which is the physical layer control signal, MAC control element (CE) which is the MAC layer control signal, or RRC signaling, etc.) and indicate to switch to other configured DL/UL BWP (by L1 signaling, MAC CE, or RRC signaling, etc.), or can the UE to switch to a given DL/UL BWP if a timer value is set and a timer is expired. The activated DL/UL BWP is defined as an active DL/UL BWP. The UE may not receive configuration for the DL/UL BWP when the UE is in an initial access procedure or RRC connection of the UE is not set up yet. In this situation, a DL/UL BWP assumed by the UE is defined as an initial active DL/UL BWP.

Physical Channel and General Signal Transmission

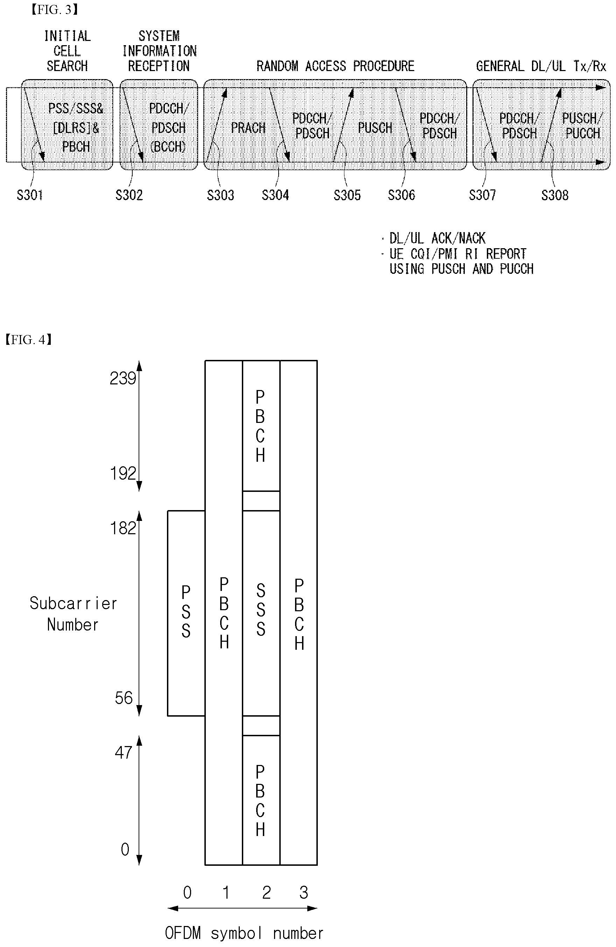

FIG. 3 illustrates physical channels and general signal transmission used in 3GPP systems. In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S301). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information S302.

When there is no radio resource first accessing the eNB or for signal transmission, the UE may perform a Random Access Procedure (RACH) to the eNB S303 to S306. To this end, the UE may transmit a specific sequence to a preamble through a Physical Random Access Channel (PRACH) S303 and S305 and receive a response message (Random Access Response (RAR) message) for the preamble through the PDCCH and a corresponding PDSCH. In the case of a contention based RACH, a Contention Resolution Procedure may be additionally performed S306.

The UE that performs the above procedure may then perform PDCCH/PDSCH reception (S307) and Physical Uplink Shared Channel (PUSCH)/Physical Uplink Control Channel (PUCCH) transmission (S308) as a general uplink/downlink signal transmission procedure. In particular, the UE may receive Downlink Control Information (DCI) through the PDCCH.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

**Synchronization Signal Block (SSB) Transmission and Related Operation**

FIG. 4 is a diagram illustrating an SSB structure to which a method proposed in the present disclosure is applicable. The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 4, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers.

Polar coding and quadrature phase shift keying (QPSK) are applied to the PBCH. The PBCH consists of data REs and demodulation reference signal (DMRS) REs every OFDM symbol. Three DMRS REs are present per RB, and three data REs are present between the DMRS REs.

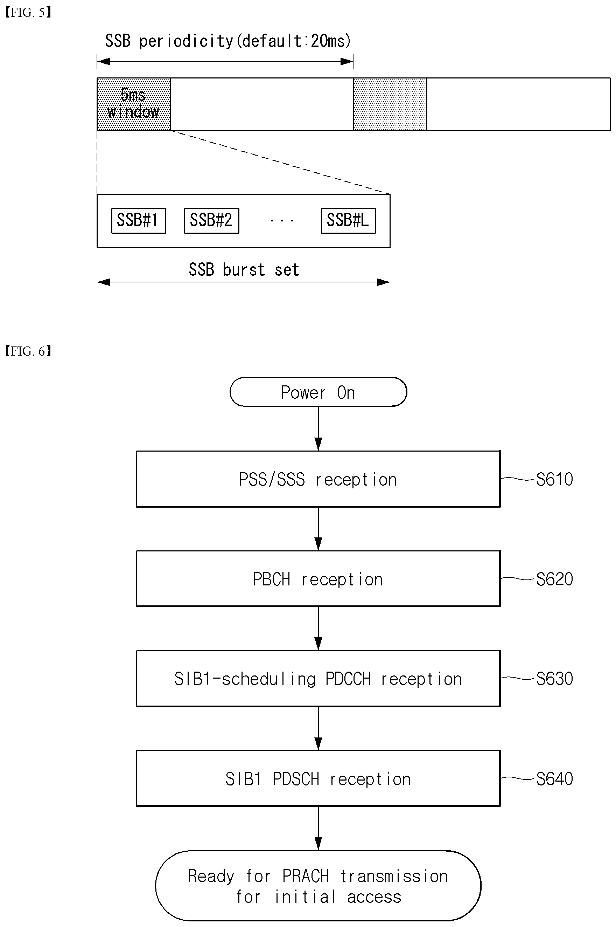

FIG. 5 illustrates SSB transmission to which a method proposed in the present disclosure is applicable.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SSB burst set. The maximum transmission number L of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time location of SSB candidates within the SSB burst set may be defined depending on SCS as follows. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

The contents described above can be combined and applied to methods described below in the present disclosure, or can be supplemented to clarify technical features of the methods described in the present disclosure. Methods described below are merely distinguished for convenience of explanation. Thus, it is obvious that partial configuration of any method can be substituted or combined with partial configuration of another method.

**Technical terms used in the present disclosure**

UE: User Equipment
SSB: Synchronization Signal Block
MIB: Master Information Block
RMSI: Remaining Minimum System Information
FR1: Frequency domain with frequency range of 1.6 GHz or less (e.g., 450 MHz to 6,000 MHz)
FR2: Millimeter wave (mmWave) domain with frequency range of 2.24 GHz or higher (e.g., 24,250 MHz to 52,600 MHz)
BW: Bandwidth
BWP: Bandwidth Part
RNTI: Radio Network Temporary Identifier
CRC: Cyclic Redundancy Check
SIB: System Information Block
SIB1: SIB1 for NR devices = RMSI (Remaining Minimum System Information). It broadcasts information, etc. necessary for cell access of an NR UE.
CORESET (COntrol REsource SET): Time/frequency resource in which an NR UE tries candidate PDCCH decoding
CORESET#0: CORESET for Type0-PDCCH CSS set for NR devices (configured in MIB)
Type0-PDCCH CSS set: a search space set in which an NR UE monitors a set of PDCCH candidates for a DCI format with CRC scrambled by a SI-RNTI
MO: PDCCH Monitoring Occasion for Type0-PDCCH CSS set
SIB1-R: (additional) SIB1 for reduced capability NR devices. It may be limited when it is generated with a separate TB from SIB1 and is transmitted on a separate PDSCH.
CORESET#0-R: CORESET#0 for reduced capability NR devices
Type0-PDCCH-R CSS set: a search space set in which a redcap UE monitors a set of PDCCH candidates for a DCI format with CRC scrambled by a SI-RNTI
MO-R: PDCCH Monitoring Occasion for Type0-PDCCH CSS set
Cell defining SSB (CD-SSB): SSB including RMSI scheduling information among NR SSBs
Non-cell defining SSB (non-CD-SSB): SSB that has been deployed on NR sync raster, but does not include RMSI scheduling information of a corresponding cell for measurement. But, the SSB may include information informing a location of cell defining SSB.
SCS: subcarrier spacing
SI-RNTI: System Information Radio-Network Temporary Identifier
Camp on: "Camp on" is the UE state in which the UE stays on a cell and is ready to initiate a potential dedicated service or to receive an ongoing broadcast service.
TB: Transport Block
RSA (Redcap standalone): Cell supporting only redcap device or service
SIB1(-R)-PDSCH: PDSCH transmitting SIB1(-R)
SIB1(-R)-DCI: DCI scheduling SIB1(-R)-PDSCH. DCI format 1_0 with CRC scrambled by SI-RNTI.
SIB1(-R)-PDCCH: PDCCH transmitting SIB1(-R)-DCI
FDRA: Frequency Domain Resource Allocation
TDRA: Time Domain Resource Allocation
RA: Random Access
MSGA: preamble and payload transmissions of the random access procedure for 2-step RA type.
MSGB: response to MSGA in the 2-step random access procedure. MSGB may consist of response(s) for contention resolution, fallback indication(s), and backoff indication.
RO-N: RACH Occasion (RO) for normal UE 4-step RACH and 2-step RACH (if configured)
RO-N1, RO-N2: If separate RO is configured for normal UE 2-step RACH, it is divided into RO-N1 (4-step) and RO-N2 (2-step).
RO-R: RACH Occasion (RO) separately configured from RO-N for redcap UE 4-step RACH and 2-step RACH(if configured)
RO-R1, RO-R2: If separate RO is configured for redcap UE 2-step RACH, it is divided into RO-R1 (4-step) and RO-R2 (2-step).
PG-R: MsgA-Preambles Group for redcap UEs
RAR: Random Access Response
RAR window: the time window to monitor RA response(s)

FH: Frequency Hopping
iBWP: initial BWP
iBWP-DL(-UL): initial DL(UL) BWP
iBWP-DL(-UL)-R: (separate) initial DL(UL) BWP for RedCap
CS: Cyclic shift
NB: Narrowband
TO: Traffic Offloading
mMTC; massive Machine Type Communications
eMBB: enhanced Mobile Broadband Communication
URLLC: Ultra-Reliable and Low Latency Communication
RedCap: Reduced Capability
eRedCap: enhanced RedCap
FDD: Frequency Division Duplex
HD-FDD: Half-Duplex-FDD
DRX: Discontinuous Reception
RRC: Radio Resource Control
RRM: Radio Resource Management
IWSN: Industrial Wireless Sensor Network
LPWA: Low Power Wide Area
RB: Resource Block
CCE: Control Channel Element
AL: Aggregation Level
PRG: Physical Resource-block Group
DFT-s-OFDM: DFT-spread OFDM
PBCH: Physical Broadcast Channel
A-PBCH: Additional PBCH
BD: blind detection
EPRE: Energy Per RE
SNR: Signal-to-Noise Ratio
TDM: Time Division Multiplexing
DMRS: DeModulation Reference Signal
TDD: Time Division Duplex

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases.

Features such as enhanced low latency, high reliability, massive connection, etc. of the 5G wireless communication system can be applied to use cases (hereinafter, NB use cases) that have been previously supported in narrowband (NB), as follows.

[Examples of narrowband based use cases (NB use cases)]

i) Railway mobile communication

ii) Utility/infrastructure network

iii) Mobile communication for public safety

These NB use cases have been previously supported at a bandwidth of about 3 MHz in a frequency band of less than 1 GHz using the previous generation wireless communication system. In the same manner, when the 5G wireless communication system intends to support the NB use cases, the NB use cases may be supported, for example, at the similar frequency bandwidth (about 3 MHz and below 5 MHz) in the same frequency band (below 1 GHz). However, since a minimum channel BW supported by the current 5G NR standard is 5 MHz, a channel bandwidth of less than 5 MHz shall first be supported.

[Example of 5G NR frequency band for NB use case support (TS38.101-1)]

NB use cases can be supported in the following NR operating frequency band defined in NR standard TS38.101-1.

[Table 5]

| NR operating band | Uplink (UL) operating band BS receive/UE transmit $F_{UL\_low}$ - $F_{UL\_high}$ | Downlink (DL) operating band BS transmit/UE receive $F_{DL\_low}$ - $F_{DL\_high}$ | Duplex Mode |
|---|---|---|---|
| n8 | 880 MHz - 915 MHz | 925 MHz - 960 MHz | FDD |
| n26 | 814 MHz - 849 MHz | 859 MHz - 894 MHz | FDD |
| n28 | 703 MHz - 748 MHz | 758 MHz - 803 MHz | FDD |
| n100 | 874.4 MHz - 880 MHz | 919.4 MHz - 925 MHz | FDD |

Table 5 shows UL/DL operating band defined per NR operating band in Frequency Range1 FR1.

[Example of definition of channel BW of less than 5 MHz for NB use case support]

Table 6 shows an example of the maximum number of configurable RBs $(N_{RB})$ for each UE channel BW. According to Table 6, in order to support the NB use cases based on 5G NR, 3 MHz UE channel BW is defined and the maximum number of configurable RBs $(N_{RB})$ in the 3 MHz UE channel BW is defined to 15, and in this case, a resource utilization ratio (or RU) (%) is defined.

[Table 6]

| UE channel BW | **3 MHz** | 5 MHz | 10 MHz | 15 MHz | 20 MHz | 25 MHz | 30 MHz | 40 MHz | 50 MHz |
|---|---|---|---|---|---|---|---|---|---|
| NRB | **15** | 25 | 52 | 79 | 106 | 133 | 160 | 216 | 270 |
| RU | **0.9** | 0.9 | 0.936 | 0.948 | 0.954 | 0.958 | 0.96 | 0.972 | 0.972 |

Further, for newly defined 3 MHz UE channel BW, considering interference between contiguous channels and a resource utilization ratio, other NRB values shown in Table 7 below can be defined and used.

[Table 7]

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| 15 | 12 | 13 | 14 | 15 | 16 |
| RU (%) | 0.72 | 0.78 | 0.84 | 0.9 | 0.96 |

For example, the channel BW/NRB may be applied for both DL and UL as the same value. For example, the channel BW/$N_{RB}$ may be configured/supported separately/independently for DL and UL. A method according to the second example may be applied to the following situation. The method can be used to when intending to apply conditions where additional DFT precoding is applicable only to the UL when determining the NRB values, while supporting maximum channel BW/$N_{RB}$ values in both DL and UL considering interference between contiguous channels and the resource utilization ratio.

FIG. 6 is a flow chart illustrating reception of DL signals/channels in an initial access procedure to which a method according to an embodiment of the present disclosure is applicable. Referring to FIG. 6, a 5G NR UE may receive DL signals/channels in order of S610 to S640 in an initial access procedure. The specific details for the initial access procedure are the same as those described in FIGS. 3 to 5, so duplicate descriptions will be omitted.

The existing NR UE may receive CORESET#0 information via a master information block (MIB) transmitted on a PBCH and receive initial DL signals/channels through CORESET#0 frequency band in the initial access procedure. However, considering the channel BWs shown in Tables 6 and 7 and supportable CORESET#0 bandwidth in the NR standard, the operation according to the above-described conventional method may be inefficient.

The present disclosure proposes methods for effectively supporting an NR DL control channel for initial access in a narrowband, in consideration of such situations.

In the present disclosure, narrowband and NB can be interpreted/applied interchangeably. Further, channel BW, NRB, allowed/supported transmission BW, (punctured/non-punctured) PBCH BW, and max transmission BW can be interpreted/applied interchangeably.

In the present disclosure, broadcast signaling further includes a signaling method using PBCH payload generated in the PHY layer, PBCH scrambling sequence, and PBCH DMRS sequence initialization information, in addition to system information including SIB1 and MIB.

In the present disclosure, the broadcast signaling may comprise defining or interpreting differently the existing bit/field. For example, if some of signaling methods based on MIB used for the existing broadcast signaling, PBCH payload generated in the PHY layer in addition to the MIB, and PBCH scrambling sequence and PBCH DMRS sequence initialization information no longer need to be signaled, the broadcast signaling may comprise newly defining and signaling the corresponding bit/field. For example, the broadcast signaling may comprise using subCarrierSpacingCommon in MIB (1 bit, {15 kHz, 30 kHz}) for other 1-bit broadcast signaling purposes usage in a narrowband frequency band supporting only 15 kHz SCS. If PBCH/SIB1/SIB1-scheduling DCI transmission for a new UE is possible without affecting the legacy UE through a frequency band, a dedicated spectrum, a dedicated sync raster, etc., the above-described broadcast signaling may comprise a signaling method performed by newly defining and differently interpreting the bit/field that has been used for broadcast signaling purpose for the existing legacy UE.

[Method for transmitting a PBCH in a narrow band]

In order to support NR DL broadcast signal reception in a narrowband with 5 MHz bandwidth, a subset of PBCH transmission resource blocks (RBs) may be transmitted. In the present disclosure, 'transmitting a subset of PBCH transmission RBs' may mean 'PBCH is transmitted based on a subset of RBs assigned to the PBCH.'

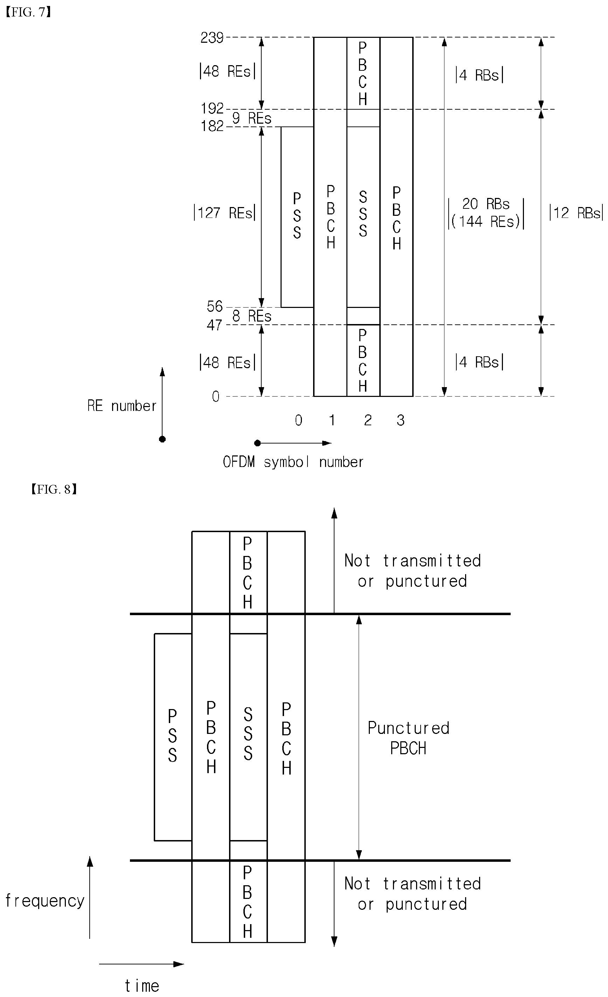

In the present disclosure, the PBCH transmission RBs may refer to RBs related to the PBCH or RBs allocated to the PBCH in a time-frequency structure of SS/PBCH (e.g., see FIG. 7). In the present disclosure, a 'PBCH transmission RB subset' may mean a subset of RBs related to the PBCH or a subset of RBs allocated to the PBCH.

In the present disclosure, PSS/SSS transmission RBs may refer to RBs related to the PSS/SSS or RBs allocated to the PSS/SSS in the time-frequency structure of SS/PBCH (e.g., see FIG. 7).

In the present disclosure, the resource block (RB) may be interpreted/replaced with a physical resource block (PRB) or a common resource block (CRB).

FIG. 7 illustrates an example of a time-frequency structure of SSB according to an embodiment of the present disclosure. For example, the time-frequency structure of SSB may be defined in NR standard.

Specifically, FIG. 7 illustrates the number of REs/the number of RBs in the time-frequency structure of FIG. 4 is added for each domain. Referring to FIG. 7, a frequency domain (bandwidth) for PSS and SSS consists of 127 resource elements (REs). A frequency domain (bandwidth) for PBCH consists of 20 resource blocks (RBs) (= 144 REs) or 4 RBs (= 48 REs).

For example, a base station may need to exclude or puncture at least five PBCH transmission RBs from PBCH consisting of 20 PRBs and transmit remaining RBs, in order to support PBCH transmission/reception in 3 MHz channel BW stipulated as NRB = 15 PRBs. That is, the base station may transmit a subset of up to 15 PBCH transmission RBs among a total of 20 PBCH transmission RBs. Further, all the PSS/SSS transmission RBs can be transmitted for the same level of synchronization and measurement performance as the existing NR UE. In this case, the minimum PBCH transmission RBs may be 12 RBs including PSS/SSS.

In the present disclosure, the "punctured" PBCH or the PBCH transmission RB subset means an actual transmitted PBCH after the puncturing application when a subset of PBCH transmission RBs is punctured and transmitted. Therefore, the 'punctured PBCH' and the 'PBCH transmission RB subset' can be interpreted/applied interchangeably.

In 3 MHz channel BW stipulated as NRB = 15 PRBs as in the above example, the BS/UE may configure the PBCH transmission RB subset using 12 PRBs to 15 PRBs. Methods of configuring a PBCH transmission RB subset respectively using 12 PRBs and 15 PRBs are described in detail below.

[Example #P1]

A method of configuring a PBCH transmission RB subset using 12 PRBs including PSS/SSS may be considered.

The example #P1 is a case in which a PBCH transmission RB subset is configured using only 12 PRBs including PSS/SSS. That is, a PBCH transmission RB subset may be configured using a minimum RB subset including all the PSS/SSS (e.g., FIG. 8). The example #P1 may be efficient when it intends to apply to all of various narrowband channel BWs by defining one punctured PBCH or the PBCH transmission RB subset.

FIG. 8 illustrates an example of a frequency resource domain for PBCH transmission/reception according to an embodiment of the present disclosure. Specifically, FIG. 8 illustrates an example of a PBCH transmission RB subset based on the example #P1.

[Example #P2]

A method of configuring a PBCH transmission RB subset using 15 PRBs including PSS/SSS may be considered.

The example #P2 is a case in which a PBCH transmission RB subset is configured using 15 PRBs including PSS/SSS.

A PBCH transmission RB subset (i.e., detailed configuration of 15 PRBs) according to an embodiment of the present disclosure may be determined based on one of the following configurations #P2-1 to #P2-4.

Configuration #P2-1: Center 12 PRB (for PSS/SSS) + lower 3 PRB
Configuration #P2-2: Center 12 PRB (for PSS/SSS) + higher 3 PRB
Configuration #P2-3: Center 12 PRB (for PSS/SSS) + lower 2 PRB + higher 1 PRB
Configuration #P2-4: Center 12 PRB (for PSS/SSS) + higher 2 PRB + lower 1 PRB

Due to characteristics of PBCH RE mapping, preferentially transmitting lower RBs of PBCH transmission RBs may be slightly advantageous in terms of performance. Therefore, if other conditions are the same, the Configuration #P2-1 rather than the Configuration #P2-2 may have an advantage in terms of PBCH reception performance. In addition, the Configuration #P2-3 rather than the Configuration #P2-4 may have an advantage in terms of PBCH reception performance.

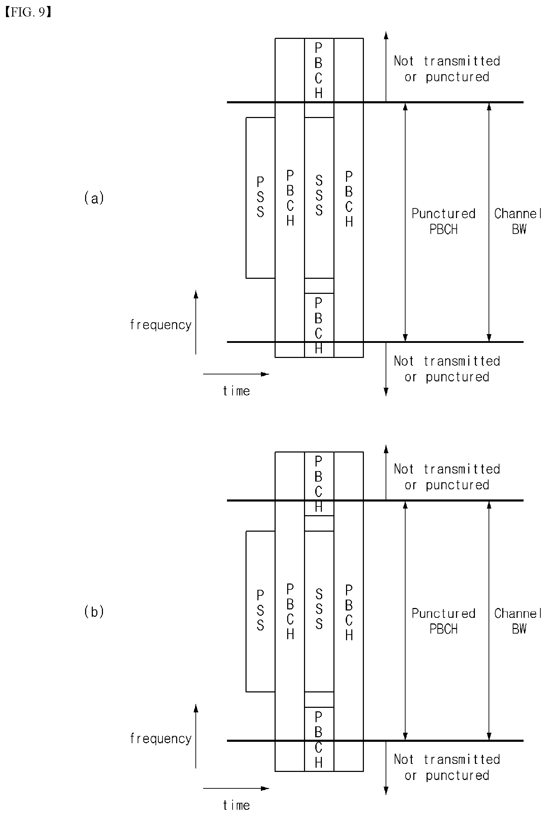

The Configurations #P2-1 and P2-2 may be affected in terms of sync performance and measurement performance in a situation, in which there is interference from a contiguous channel/frequency band because the PSS/SSS is exposed to a band edge. If the influence of the interference is expected, the Configuration #P2-3 or the Configuration #2-4 may be considered. In the Configuration #P2-3 or the Configuration #2-4, the PSS/SSS is arranged further inside the channel BW, and thus this method may be to protect the PSS/SSS from the interference from the contiguous channel/-frequency band. This is described below with reference to FIG. 9.

FIG. 9 illustrates an example of a frequency resource domain for PBCH transmission/reception according to another embodiment of the present disclosure.

(a) of FIG. 9 illustrates the Configuration #P2-1. In this case, the PBCH transmission RB subset may include center 12 PRB (for PSS/SSS) + lower 3 PRB.
(b) of FIG. 9 illustrates the Configuration #P2-3. In this case, the PBCH transmission RB subset may include center 12 PRB (for PSS/SSS) + lower 2 PRB + higher 1 PRB.

## PDCCH transmission and reception method

In order to receive an SIB1-PDCCH in a narrowband, the UE may receive CORESET #0 and Type0-PDCCH CSS set information through an MIB transmitted through a PBCH. Since the CORESET #0 bandwidth currently supported by the NR standard is 24 PRBs (4.32 MHz) based on a 15 kHz SCS, the CORESET #0 may exceed the narrowband channel BWs illustrated in Table 6 and Table 7. At this time, after mapping REs to a CORESET #0, the base station may transmit the PDCCH only for the REs belonging to the channel BW. In other words, the base station may transmit the PDCCH based only on the REs belonging to the channel BW by puncturing/truncating the REs that exceed the channel BW.

When the PDCCH may not be transmitted across the entire CORESET #0 BW for narrowband transmission/-reception, the REs for actual PDCCH transmission and reception may be determined in specific units in the frequency domain. The specific units may include RE units, PRB units, REG units, REG bundle units, or CCE units. If CCE units are employed, in the case of 3-symbol CORESET #0, whether the PDCCH is actually transmitted/received (or whether puncturing/truncation is applied) may be determined in units of 2 PRBs. Alternatively, in the case of 2-symbol CORESET #0, the REs for actual PDCCH transmission and reception may be determined in units of 3 PRBs.

The UE may receive the PDCCH from REs within the channel BW by assuming the base station operation above (i.e., puncturing/truncation operation). In other words, not all REs mapped to the CORESET #0 bandwidth according to the NR standard are employed for PDCCH transmission and reception. The UE/base station may operate based on the assumption that only those REs belonging to the channel BW among the corresponding REs are employed for actual PDCCH transmission and reception.

Alternatively, the UE may receive the PDCCH from REs within the PBCH BW by assuming the base station operation above (i.e., puncturing operation). In other words, not all REs mapped to the CORESET #0 bandwidth according to the NR standard are employed for PDCCH transmission and reception. The UE/base station may assume that only those REs belonging to the PBCH BW among the mapped REs are employed for actual PDCCH transmission and reception.

At this time, the PBCH BW in which the UE expects to receive a PDCCH may be the PBCH BW "actually used for PBCH transmission." In other words, when a PBCH is transmitted after puncturing a portion of the RBs for PBCH transmission, the PBCH BW used for actual PBCH transmission may mean the PBCH BW "used for actual PBCH transmission after puncturing." The "punctured" PBCH BW may be assumed to be the initial DL BWP.

Also, in this case, during the initial access, if the CORESET #0 BW exceeds the channel BW, the UE may assume the PBCH BW to be the initial DL BWP. At this time, the PBCH BW assumed by the UE as the initial DL BWP may be the PBCH BW "actually used for PBCH transmission." In other words, when puncturing and transmitting a portion of the PBCH transmission RBs, the PBCH BW "actually used for PBCH transmission after puncturing" may be assumed to be the initial DL BWP. Alternatively, in the same sense, the "punctured" PBCH BW may be assumed to be the initial DL BWP.

The reason for newly defining the initial DL BWP in the narrowband as described above may be intended to eliminate factors that may cause UE complexity issues such as puncturing or partial reception within the initial DL BWP or an adverse effect on reception coverage.

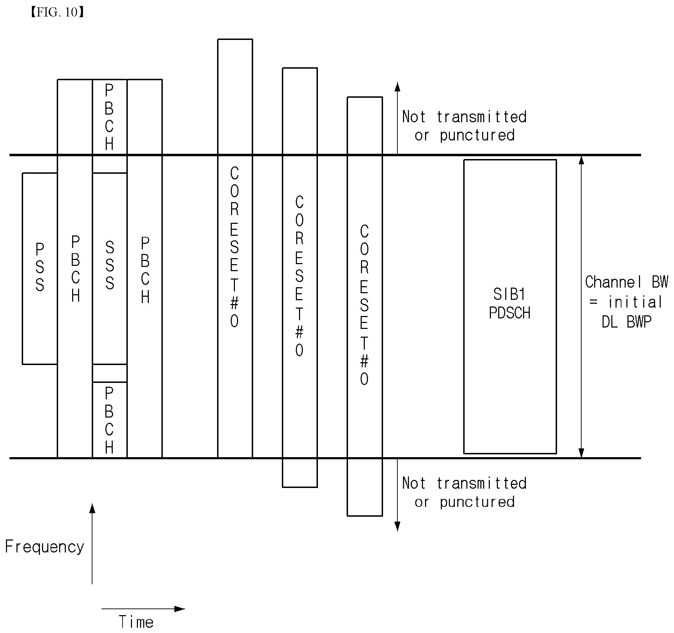

FIG. 10 illustrates a frequency domain related to PDCCH transmission and reception.

Referring to FIG. 10, in a narrowband where NRB = 16 PRBs and CORESET #0 BW = 24 PRBs, it is assumed that a PBCH is transmitted by puncturing higher 4 PRBs of the PBCH.

FIG. 10 shows the frequency domain where a UE expects PDCCH reception among the CORESET #0 BW and the initial DL BWP.

Also, FIG. 10 illustrates three CORESET #0s. The three CORESET #0s have a size of 24 PRBs among the CORESET #0s that may be configured/indicated by a base station through Table 13-1 of the current NR standard TS 38.213. The three CORESET #0s have different RB offset values (following the definition in Table 13-1 of the TS 38.213). However, in the case of the corresponding CORESET #0s, it is expected that PDCCH transmission and reception will be performed in a similar number of REs within the maximum transmission BW or PBCH BW. Since there may not be a significant difference in terms of performance, all three types of CORESET #0s may be supported.

The position of CORESET #0 may be defined/determined relative to an SSB. Specifically, the relative position of CORESET #0 may be determined as shown in Table 8 below. In other words, the interval between CORESET #0 and the SSB may be determined based on the offset parameter (RB offset) and $k_{SSB}$ parameter (subcarrier offset).

[Table 8]

| |
|---|
| For operation with shared spectrum channel access in FR2-2 and for operation without shared spectrum channel access, a UE assumes that the offset in Tables 13-1 through 13-10A is defined with respect to the SCS of the CORESET for Type0-PDCCH CSS set from the smallest RB index of the CORESET for Type0-PDCCH CSS set to the smallest RB index of the common RB overlapping with the first RB of the corresponding SS/PBCH block. The SCS of the CORESET for Type0-PDCCH CSS set is provided by *subCarrierSpacingCommon* for FR1 and FR2-1 and same as the SCS of the corresponding SS/PBCH block for FR2-2. In Tables 13-7, 13-8, and 13-10, $k_{SSB}$ is defined in [4, TS 38.211]. <br><br> (...) <br><br> "The quantity $k_{SSB}$ is the subcarrier offset from subcarrier 0 in common resource block $N_{CRB}^{SSB}$ to subcarrier 0 of the SS/PBCH block, where $N_{CRB}^{SSB}$ is obtained from the higher-layer parameter *offsetToPointA*." |

$k_{SSB}$ may be indicated by the ssb-SubcarrierOffset parameter in the system information block (e.g., MIB). For example, $k_{SSB}$ may be indicated by an integer from 0 to 15. If the ssb-SubcarrierOffset parameter is not set, $k_{SSB}$ may be derived from a frequency difference between the SS/PBCH block and point A.

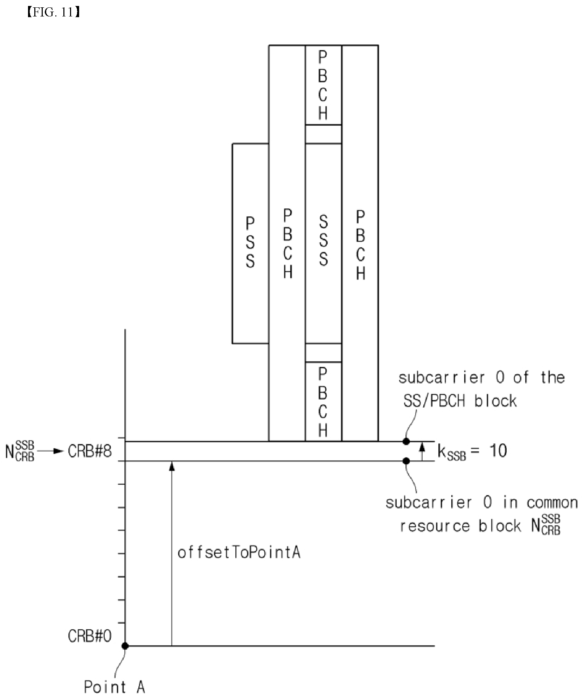

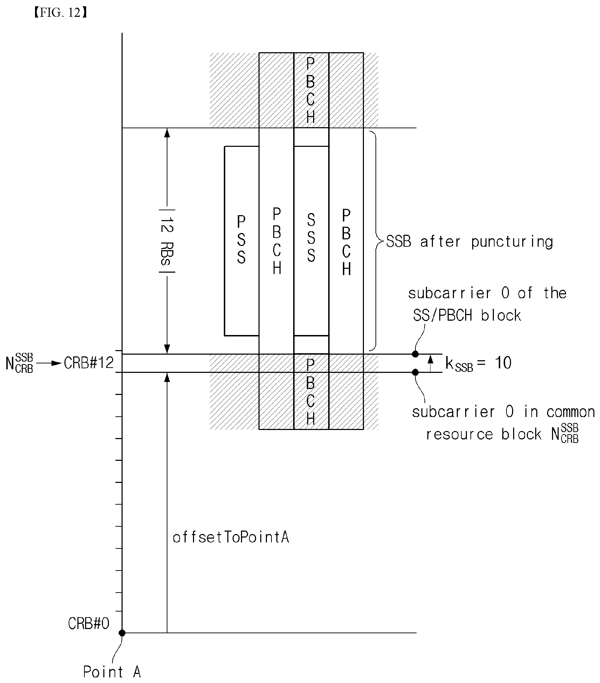

The $k_{SSB}$ parameter may be defined based on one of the embodiments described later (e.g., Method #A or Method #B). For example, the $k_{SSB}$ parameter may be defined based on the SS/PBCH block in the same manner as in the existing method (Method #A). For example, the $k_{SSB}$ parameter may be defined based on the SS/PBCH block after puncturing (Method #B). Hereinafter, point A related to the $k_{SSB}$ parameter will be described with reference to FIGS. 11 and 12.

FIG. 11 illustrates point A according to a conventional method. Specifically, FIG. 11 illustrates offsetToPointA. Referring to FIG. 11, offsetToPointA represents a frequency offset between point A and the lowest subcarrier (subcarrier 0) of the lowest resource block (CRB #8) that overlaps with the SS/PBCH block. $k_{SSB}$ represents a subcarrier offset between the lowest subcarrier number (subcarrier 0) of the SS/PBCH block and subcarrier 0 in common resource block ( $N_{CRB}^{SSB}$ ), where the common resource block ( $N_{CRB}^{SSB}$ ) is obtained from offsetToPointA. That is, the common resource block ( $N_{CRB}^{SSB}$ ) may be a lowest resource block that overlaps with the SS/PBCH block based on offsetToPointA.

FIG. 12 illustrates point A according to an embodiment of the present disclosure. Descriptions overlapping with those given with reference to FIG. 11 are omitted. Referring to FIG. 12, the SS/PBCH block after puncturing may be composed of 12 resource blocks. According to an embodiment of the present disclosure, offsetToPoint A represents a frequency offset between point A and the lowest numbered subcarrier (subcarrier 0) of the lowest numbered resource block ( $N_{CRB}^{SSB}$ , CRB #12) overlapping with the SS/PBCH block after puncturing.

Hereinafter, embodiments for criteria related to the relative position of CORESET #0 (e.g., the offset in Table 8) in Method #A to Method #C will be described.

[Method #A]

Even if the PBCH and PDCCH are transmitted in a narrowband based on the methods proposed in the present disclosure, a relative positional relationship between the SSB and CORESET #0 and their signaling method may follow the exiting standards. In other words, "the smallest RB index of the CORESET for Type0-PDCCH CSS set" and "the first RB of the corresponding SS/PBCH block" described in the above standards may be defined based on the SSB(PBCH)/CORESET #0 BW before puncturing.

Specifically, even if actual transmission/reception is not performed due to subset transmission for narrowband transmission, puncturing, and the like, the offset in Table 8 may be defined based on the entire PBCH BW (before being punctured) and the entire CORESET #0 BW (before being punctured).

[Method #B]

"The first RB of the corresponding SS/PBCH block" may be defined based on the PBCH transmission RB that is actually transmitted/received. The actually transmitted/received PBCH transmission RB may mean an RB after puncturing (or subset determination).

In other words, the offset in Table 8 may be defined based on the punctured PBCH (i.e., SS/PBCH block after puncturing).

For example, in the case of a 12-RB PBCH, "the first RB of the corresponding SS/PBCH block" may refer to one of the following items i) through iv).

    i) "the first RB of the corresponding "(actually) transmitted" SS/PBCH block"
    ii) "the first RB of the corresponding SS/PBCH block after puncturing"
    iii) "the first RB of the corresponding "non-punctured" SS/PBCH block",
    iv) "the subcarrier number 48 of the corresponding SS/PBCH block"

For narrowband transmission, a new CORESET #0 configuration may be added instead of reusing the conventional NR standard TS 38.213 Table 13-1. For example, a CORESET #0 added/introduced for narrowband transmission may have a bandwidth smaller than or equal to the channel BW. Alternatively, even if the bandwidth of the added/introduced CORESET #0 is larger than the channel BW, it may be smaller than the conventional CORESET #0 bandwidth. For example, the following CORESET #0 configurations may be added.

- CORESET #0 size = 12 PRBs (in the case of a 15-PRB channel BW)

In this case, by using 2 OFDM symbols, a maximum total of 4 CCEs (12 REGs per OFDM symbol * 2 OFDM symbols = 24 REGs = 4 CCEs) may be supported. Therefore, 4 CCE AL support may be possible.

- CORESET #0 size = 18 PRBs (for a 20-PRB channel BW)

In this case, by using 3 OFDM symbols, a maximum total of 9 CCEs (18 REGs per OFDM symbol * 3 OFDM symbols = 54 REGs = 9 CCEs) may be supported. Conventional 8 CCE AL support may be possible.

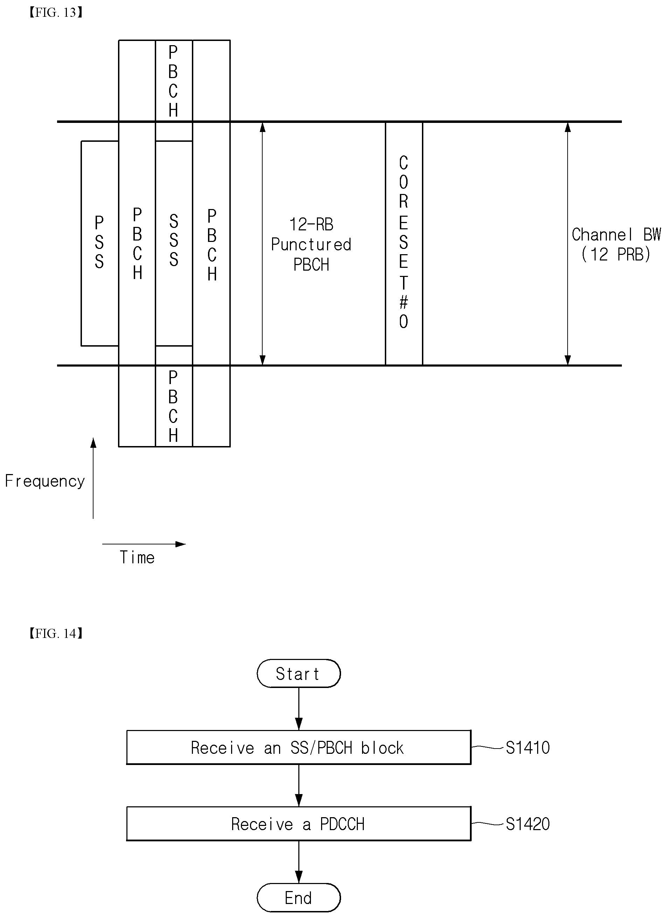

The CORESET #0 above will be described below with reference to FIG. 13.

FIG. 13 illustrates CORESET #0 according to an embodiment of the present disclosure. Referring to FIG. 13, when a 12-RB PBCH is supported in a narrowband in which the transmission BW is 12 PRBs, a CORESET #0 having a CORESET #0 size of 12 PRBs may be applied.

At this time, the RB offset value (the offset in Table 8) may be defined as follows.

For example, the RB offset value may be 0. In other words, the smallest RB index of a CRB overlapping with the smallest RB index (index of the first RB) of a punctured SSB may be aligned with the smallest RB index of CORESET #0.

For example, when the punctured PBCH occupies an entire maximum transmission BW, or when CORESET#0 is transmitted without puncturing within the maximum transmission BW and/or a punctured PBCH BW, an RB offset value may be defined as follows. The RB offset value may be defined as a value such that the "highest" RB index of a CRB overlapping with the smallest RB index of a punctured SSB is aligned with the smallest RB index of CORESET #0.

In order to support the example of FIG. 13 through Method #A, the RB offset value may be defined as a negative (-) value. Specifically, when the RB offset value is -4, the smallest RB index of a CRB overlapping with the smallest RB index of the punctured SSB may be aligned with the smallest RB index of CORESET #0.

[Method #C]

The offset described above may be defined based on a smallest RB index according to a criterion different from that for a non-punctured PBCH (Method #A) or a punctured PBCH (Method #B). The offset may be defined based on the smallest RB index among RBs (or CRBs) defined within the maximum transmission BW or RBs (or CRBs) in which DL reception is possible. At this time, according to an offset value of 0, the smallest RB index among RBs (or CRBs) defined within the maximum transmission BW or RBs (or CRBs) in which DL reception is possible may be aligned with the CORESET #0 smallest RB index.

Parameters for supporting the above methods (Method #A/B/C) may be indicated/configured by broadcast signaling (e.g., an MIB). These parameters may include all or part of the parameters, including an applied method among the methods and an offset parameter.

According to one embodiment, the highest RB index of CORESET #0 may be determined without separate signaling. For example, the highest RB index of CORESET #0 may be determined based on the biggest RB index (highest RB index) of a CRB that does not exceed the maximum transmission BW. As another example, the highest RB index of CORESET #0 may be determined based on the biggest RB index (highest RB index) of a CRB that does not exceed the punctured PBCH BW.

At this time, the CORESET#0 highest RB index may be determined in units of RBs/REGs/REG bundles/CCEs. When the CORESET#0 highest RB index is configured in units of REG bundles/CCEs, the total number of RBs of CORESET #0 may be limited to a multiple of the number of RBs constituting a REG bundle/CCE.

According to one embodiment, the CORESET #0 highest RB index may be configured through broadcast signaling. For example, the base station may indicate/configure one value among supportable CORESET #0 BW values predefined in the standard to the UE based on broadcast signaling. The CORESET #0 BW supported in a narrowband may have a BWP size that a legacy UE does not support, but a new UE supporting narrowband operation may be configured/implemented to mandatorily support the CORESET #0 BW size supported in the narrowband.

As shown in Table 9 below, one or a plurality of CCEs constitute a PDCCH.

[Table 9]

| |
|---|
| 7.3.2 Physical downlink control channel (PDCCH) |
| 7.3.2.1 Control-channel element (CCE) |
| A physical downlink control channel consists of one or more control-channel elements (CCEs) as indicated in Table 7.3.2.1-1. |

| Table 7.3.2.1-1: Supported PDCCH aggregation levels. | |
|---|---|
| **Aggregation level** | **Number of CCEs** |
| 1 | 1 |
| 2 | 2 |
| 4 | 4 |
| 8 | 8 |
| 16 | 16 |

CCEs constituting a PDCCH are mapped to a CORESET and transmitted according to a procedure defined below. Specifically, non-interleaved CCE-to-REG mapping or interleaved CCE-to-REG mapping may be applied. For example, non-interleaved CCE-to-REG mapping may be applied for a frequency selective scheduling gain. For example, interleaved CCE-to-REG mapping may be applied to obtain a frequency diversity gain. In the case of CORESET #0, since it is difficult to expect a frequency selective scheduling gain, only interleaved CCE-to-REG mapping is supported without a separate configuration.

7.3.2.2 Control-resource set (CORESET)

A control-resource set consists of $N_{\mathrm{RB}}^{\mathrm{CORESET}}$ resource blocks in the frequency domain and $N_{\mathrm{symb}}^{\mathrm{CORESET}} \in \{1,2,3\}$ symbols in the time domain.

A control-channel element consists of 6 resource-element groups (REGs) where a resource-element group equals one resource block during one OFDM symbol. Resource-element groups within a control-resource set are numbered in increasing order in a time-first manner, starting with 0 for the first OFDM symbol and the lowest-numbered resource block in the control resource set.

A UE can be configured with multiple control-resource sets. Each control-resource set is associated with one CCE-to-REG mapping only.

The CCE-to-REG mapping for a control-resource set can be interleaved or non-interleaved and is described by REG bundles:

- REG bundle $i$ is defined as REGs $\{iL, iL + 1,...,iL + L -1\}$ where L is the REG bundle size, i = $0,1, ..., N_{REG}^{CORESET}/L - 1$, and $N_{\mathrm{REG}}^{\mathrm{CORESET}} = N_{\mathrm{RB}}^{\mathrm{CORESET}} N_{\mathrm{symb}}^{\mathrm{CORESET}}$ is the number of REGs in the CORESET

- CCE $j$ consists of REG bundles $\{f(6j/L), f(6j/L + 1),...,f(6j/L + 6/L - 1)\}$ where $f(\cdot)$ is an interleaver

For non-interleaved CCE-to-REG mapping, $L = 6$ and $f(x) = x$.

For interleaved CCE-to-REG mapping, $L \in \{2,6\}$ for $N_{\mathrm{symb}}^{\mathrm{CORESET}} = 1$ and $L \in \{N_{\mathrm{symb}}^{\mathrm{CORESET}}, 6\}$ for $N_{\mathrm{symb}}^{\mathrm{CORESET}} \in \{2,3\}$. The interleaver is defined by

$$f(x) = (rC + c + n_{\mathrm{shift}}) \bmod \left(N_{\mathrm{REG}}^{\mathrm{CORESET}}/L\right)$$

$$x = cR + r$$

$$r = 0,1, ..., R - 1$$

$$c = 0,1, ..., C - 1$$

$$C = N_{\mathrm{REG}}^{\mathrm{CORESET}}/(LR)$$

where, $R \in \{2,3,6\}$.

The UE is not expected to handle configurations resulting in the quantity $C$ not being an integer.

For a CORESET configured by the ControlResourceSet IE:

- $N_{\mathrm{RB}}^{\mathrm{CORESET}}$ is given by the higher-layer parameter frequencyDomainResources;

- $N_{\mathrm{symb}}^{\mathrm{CORESET}}$ is given by the higher-layer parameter duration, where $N_{\mathrm{symb}}^{\mathrm{CORESET}} = 3$ is supported only if the higher-layer parameter dmrs-TypeA-Position equals 3;

- interleaved or non-interleaved mapping is given by the higher-layer parameter cce-REG-MappingType;

- L equals 6 for non-interleaved mapping and is given by the higher-layer parameter reg-BundleSize for interleaved mapping;

- $R$ is given by the higher-layer parameter interleaverSize;

- $n_{\mathrm{shift}} \in \{0,1, ...,274\}$ is given by the higher-layer parameter shiftIndex if provided, otherwise $n_{\mathrm{shift}} = N_{\mathrm{ID}}^{\mathrm{cell}}$ ; for both interleaved and non-interleaved mapping, the UE may assume

- the same precoding being used within a REG bundle if the higher-layer parameter precoderGranularity equals sameAsREG-bundle;

- the same precoding being used across the all resource-element groups within the set of contiguous resource blocks in the CORESET, and that no resource elements in the CORESET overlap with an SSB or LTE cell-specific reference signals as indicated by the higher-layer parameter lte-CRS-ToMatchAround, lte-CRS-PatternList1, or lte-CRS-PatternList2, if the higher-layer parameter precoderGranularity equals allContiguousRBs.

For CORESET 0 configured by the ControlResourceSetZero IE:

- $N_{\mathrm{RB}}^{\mathrm{CORESET}}$ and $N_{\mathrm{symb}}^{\mathrm{CORESET}}$ are defined by clause 13 of [5, TS 38.213];
- the UE may assume interleaved mapping
- $L = 6$;
- $R = 2$;
- $n_{\mathrm{shift}} = N_{\mathrm{ID}}^{\mathrm{cell}}$;
- the UE may assume normal cyclic prefix when CORESET 0 is configured by MIB or SIB1;
- the UE may assume the same precoding being used within a REG bundle.

As mentioned above, the narrowband channel BW may be smaller than the minimum bandwidth of the conventional CORESET #0 designed in consideration of general bandwidth. In this case, the CORESET #0 bandwidth may exceed the narrowband channel BW. For example, since the CORESET #0 bandwidth supported in the current NR standard is 24 PRBs (4.32 MHz) based on 15 kHz SCS, the CORESET #0 bandwidth may exceed the narrowband channel BWs shown in Tables 6 and 7. In order to support such a scenario, the following two methods have been proposed.

[Scheme #1] Method of Using New CORESET #0

A new CORESET #0 having small bandwidth included in the narrowband channel BW may be defined. A PDCCH may be transmitted based on the newly defined CORESET #0.
[Example #1 of Scheme #1] In order to support 3 MHz channel bandwidth, a CORESET #0 with a bandwidth of 12 PRBs, which is smaller than the conventional minimum bandwidth of 24 PRBs, may be newly defined.

[Scheme #2] Method of reusing conventional CORESET #0

While the conventional CORESET #0 is reused, a PDCCH may be transmitted by excluding a resource region where RE mapping is performed beyond a narrowband channel BW. For example, puncturing (truncation) may be performed on RBs exceeding the narrowband channel BW (e.g., 3 MHz, 15 PRB). As a specific example, when the frequency domain size $N_{RB}^{CORESET}$ is 24, CORESET #0 may be obtained by puncturing 9 highest numbered RBs among the 24 RBs.
For example, a base station may perform PDCCH RE mapping on the entire conventional CORESET #0 bandwidth according to the conventional method specified in the TS 38.213. The base station may transmit a PDCCH based on PDCCH transmission REs/RBs/REGs/REG bundles/CCEs included in the narrowband channel BW. At this time, the meaning of "included" may indicate the meaning of "partially included" or "entirely included."
[Example #1 of Scheme #2] In order to support 3 MHz channel bandwidth, the 24-PRB CORESET #0 defined in the TS 38.213 Table 13-1 may be reused. In this case, PDCCH transmission REs/RBs/REGs/REG bundles/CCEs mapped to REs outside a 3 MHz bandwidth (e.g., 15 PRBs based on a 15 kHz SCS) may not be transmitted through puncturing/truncation, or reception thereof by a UE may not be expected/required. For example, the highest/lowest numbered 9 RBs (or 12 RBs) among 24 PRBs may be punctured.
In a narrowband scenario where Scheme #2 (the method of reusing a conventional CORESET #0) is applied, the interleaved CCE-to-REG mapping method specified in section 7.3.2.2 may be applied to a CORESET #0 by default or through configuration. According to Scheme #2 (the method of reusing a conventional CORESET #0), the interleaving operation may be applied before performing the puncturing/truncation operation. The number of CCEs included in the channel bandwidth (i.e., those actually transmitted) may vary depending on the $n_{shift}$ parameter value defined in the standard. This is because the $n_{shift}$ parameter value has the effect of cyclically shifting the CCE indices mapped to each REG bundle in the frequency axis in units of REG bundles.
As described above, the $n_{\mathrm{shift}}$ parameter value for the interleaved CCE-to-REG mapping of a CORESET #0 is fixed to a cell ID (i.e., $n_{shift} = n_{ID}^{cell}$). Consequently, under the same CCE Aggregation Level (AL) configuration, the number of CCEs through which an actual PDCCH is transmitted varies depending on the cell ID. Therefore, a problem may occur in which the degree of variation in PDCCH transmission performance through a CORESET #0 increases for each cell.
To solve or mitigate the problem of cell ID-dependent PDCCH performance variation, the following methods are proposed.

[Method #1]

A method of broadcast signaling a cyclic shift value (i.e., the $n_{\text{shift}}$ parameter value) or cyclic shift-related information may be considered.

A base station may transmit the cyclic shift value ($n_{\text{shift}}$ parameter value) or cyclic shift-related information through the broadcast signaling method. For example, the cyclic shift value ($n_{\text{shift}}$ parameter value) or cyclic shift-related information may be determined based on at least one of cell ID information operated by the base station, CORESET #0 puncturing/truncation information (Scheme #2), and channel BW information.

For example, the cyclic shift value ($n_{\text{shift}}$ parameter value) may be a value applied to replace the cell ID value, which is $n_{\text{shift}}$ parameter value for a conventional CORESET #0.

For example, the cyclic shift-related information may indicate a value (cyclic shift offset value) added to the conventional configuration value (cell ID value in the case of CORESET #0). In this case, the cyclic shift-related information may be applied in the form of $n_{shift} = N_{ID}^{cell} + offset$.

For example, the cyclic shift value or the cyclic shift-related information (e.g., cyclic shift offset) may be indicated based on N-bits (e.g., N=1, 2, ...). At this time, based on the N-bits, the cyclic shift value or cyclic shift offset may be indicated at a spacing of $1/2^N$ of the CORESET #0 bandwidth.

For example, the cyclic shift value (i.e., $n_{\text{shift}}$ parameter value) or cyclic shift-related information may be added in the form of a parameter to the CORESET #0 Table (e.g., TS 38.213 Table 13-1 or a new CORESET #0 Table 13-X). The corresponding value may be indicated based on broadcast signaling. As a specific example, an index (e.g., 0 to 15) representing one of the configurations of CORESET #0 may be indicated based on the broadcast signaling. The cyclic shift value (i.e., $n_{\text{shift}}$ parameter value) or cyclic shift-related information may be determined by the configuration based on the corresponding index.

[Method #2]

A method of allowing the cyclic shift value to be determined in conjunction with a CORESET #0 puncturing pattern without separate signaling may be considered.

In other words, considering the broadcast signaling capacity at a very limited PBCH stage, the cyclic shift value may be defined/configured to be determined without separate signaling. This operation will be described in detail below.

In conjunction with the CORESET #0 puncturing pattern, the cyclic shift value ($n_{\text{shift}}$ parameter value) or cyclic shift-related information may be determined without separate signaling.

The base station may determine a cyclic shift value ($n_{\text{shift}}$ parameter value) or a cyclic shift offset value based on at least one of i) cell ID information that the base station operates, ii) CORESET #0 puncturing/truncation information in the case of Scheme #2 (the method of reusing a conventional CORESET #0), and/or iii) channel BW information. Mapping related to the CORESET #0 may be performed based on the determined cyclic shift value ($n_{\text{shift}}$ parameter value) or cyclic shift offset value. The base station may transmit a PDCCH through the corresponding CORESET #0.

The UE may determine the cyclic shift value ($n_{\text{shift}}$ parameter value) or cyclic shift offset value in the same manner as the base station. The UE may receive a PDCCH through the corresponding CORESET #0. To obtain CORESET #0 puncturing/truncation information, the UE may refer to information such as CORESET #0 configuration information in the MIB, the CORESET #0 Table (e.g., TS 38.213 Table 13-1 or 13-0), frequency band information, and sync raster information of a cell from which an SSB is obtained (when narrowband may be identified through a dedicated sync raster). For example, the UE may obtain/determine the CORESET #0 puncturing/truncation information based on at least one of i) CORESET #0 configuration information based on the MIB, ii) frequency band information, and/or iii) sync raster information of a cell from which an SSB is acquired.

For example, similar to Method #1, a cyclic shift value or a cyclic shift offset value may be determined according to a CORESET #0 puncturing pattern. As a specific example, the cyclic shift value or the cyclic shift offset value may be determined at intervals of $1/2^N$ (e.g., N = 1, 2, ...) of the CORESET #0 bandwidth.

[Method #3]

A method of time-varying a cyclic shift value may be considered.

In other words, in order to equalize inter-cell performance of a PDCCH transmitted through a CORESET #0, a method of time-varying a cyclic shift value ($n_{\text{shift}}$ parameter value) or a cyclic shift offset value may be considered.

The time-varying unit may be i) a slot unit, ii) a slot group unit in which several slots are grouped into a specific unit (e.g., 10 slots), iii) a specific time unit (e.g., X ms, where X = 20 ms), or iv) a search space (e.g., search space zero) periodicity unit.

The time-varying rule may be based on a random method or a deterministic method in which a base station and a UE may be synchronized with each other. To configure/determine the initial cyclic shift value for applying Method #3, the embodiments of Method #1 or Method #2 described above may be applied. In other words, the initial cyclic shift value or the cyclic shift offset value may be determined by Method #1 or Method #2. The determined cyclic shift value or cyclic shift offset value may then be changed based on the time-varying unit of Method #3.

One or more of the above methods (Method #1 to Method #3) may be supported by a network configuration. The base station may select one of the above methods and transmit a PDCCH based on the selected method. Before the UE receives the PDCCH, the base station may configure/indicate the selected method to the UE based on broadcast signaling. After receiving the corresponding broadcast signaling, the UE may receive or calculate the parameters necessary for implementing the selected method and receive the corresponding PDCCH.

The overall base station/UE operation flow applying the above methods may be as follows.

The base station determines one of the above methods (Method #1/Method #2/Method #3).

The base station configures/indicates the determined method through broadcast signaling.

The base station transmits a PDCCH through a CORESET #0 based on the determined method.

The UE determines one of the above methods based on the broadcast signaling.

The UE receives the PDCCH through the CORESET #0 based on the determined method.

Thereafter, the UE may perform operations such as receiving SIB1 and transmitting a PRACH for random access.

The methods described above may be used for the purpose of protecting PDCCH transmission/reception through a Common Search Space (CSS) where randomization through a hashing function is not sufficiently applied. At this time, the cyclic shift value ($n_{shift}$ parameter value) or the cyclic shift offset value may be determined such that the first CCE index among the PDCCH CCEs may be transmitted without being punctured whenever possible. The present embodiment is intended to address the following technical issue. Considering that the first CCE index of a received PDCCH is used when determining PUCCH transmission resources, an object of the present embodiment is to minimize implementation complexity for a UE and a base station without affecting existing UE operations.

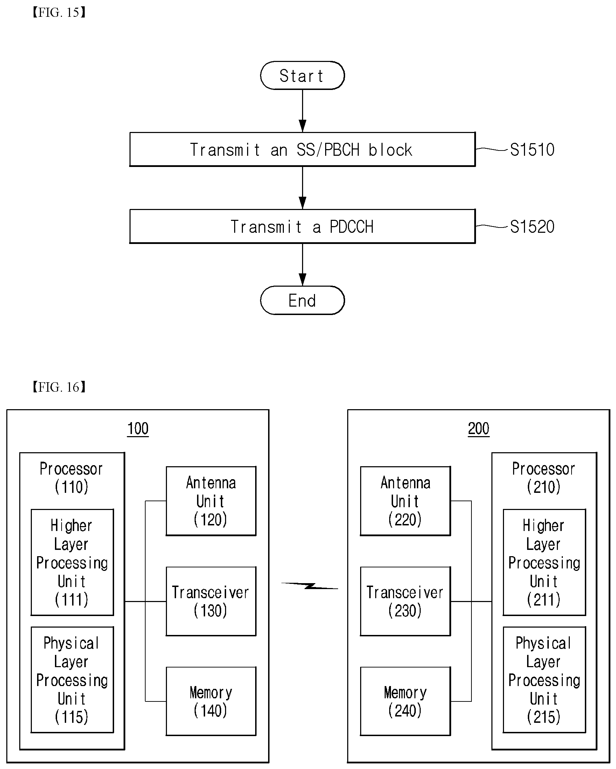

From an implementation aspect, the operations of the base station/UE according to the embodiments above (e.g., operations based on at least one of Method #A, Method #B, Method #C, Scheme #1, Scheme #2, Method #1, Method #2, and Method #3) may be processed by a device of FIG. 16 (e.g., processors 110 and 210 of FIG. 16) to be described later.

Also, the operations of the base station/UE according to the embodiments above (e.g., operations based on at least one of Method #A, Method #B, Method #C, Scheme #1, Scheme #2, Method #1, Method #2, and Method #3) may be stored in a memory (e.g., 140 and 240 of FIG. 16) in the form of instructions/programs (e.g., instructions or executable code) for driving at least one processor (e.g., 110 and 210 of FIG. 16).

Hereinafter, the embodiments described above will be described in detail from the operational perspective of a UE/base station with reference to FIGS. 14 and 15. The methods described below are separately handled merely for the convenience of description, and it should be understood that part of one method may be replaced with part of another method or may be applied in combination with each other.

FIG. 14 is a flowchart illustrating a method performed by a UE according to an embodiment of the present disclosure.

Referring to FIG. 14, a method performed by a UE according to one embodiment of the present disclosure includes receiving an SS/PBCH block S1410 and receiving a PDCCH S1420.

In the S1410 step, the UE receives a Synchronization Signal/Physical Broadcast CHannel (SS/PBCH) block from a base station.

For example, the SS/PBCH block may be an SS/PBCH block after puncturing based on at least one of the embodiments described above. Specifically, the time-frequency structure related to the SS/PBCH block (e.g., refer to FIG. 8, FIG. 9, and FIG. 12) may be based on puncturing.

The SS/PBCH block after the puncturing may be based on 12 resource blocks (RBs). The 12 resource blocks may be the remaining resource blocks excluding 8 resource blocks from among 20 resource blocks based on the time-frequency structure of a conventional SS/PBCH block (e.g., FIG. 7). As a specific example, the 12 resource blocks may be the remaining resource blocks excluding subcarriers based on subcarrier numbers 0 to 47 and 192 to 239 among subcarriers based on subcarrier numbers 0 to 239 within four Orthogonal Frequency Division Multiplexing (OFDM) symbols.

The channel bandwidth related to a cell search based on the SS/PBCH block may be smaller than 5 MHz. For example, the channel bandwidth may be 3 MHz.

In the S1420 step, the UE receives a Physical Downlink Control Channel (PDCCH) based on a Control Resource Set (CORESET) from the base station.

For example, the CORESET may be CORESET #0 based on one of the embodiments above.

According to one embodiment, based on the frequency domain size of the CORESET, which is determined based on a configuration related to the CORESET, being related to a channel bandwidth smaller than 5 MHz, the CORESET may be obtained based on interleaved mapping. The shift value (e.g., $n_{shift}$) related to the interleaved mapping may be determined based on a defined value. As a specific example, the shift value may be determined as i) the defined value or ii) a value obtained by adding the defined value to a cell ID (e.g., $N_{ID}^{cell}$). The present embodiment may be based on at least one of Method #1 to Method #3. This will be described in detail below.

For example, the defined value may be configured based on broadcast signaling. The present embodiment may be based on Method #1. As a specific example, the defined value may be based on a parameter additionally defined in a table related to the configuration of the CORESET. An example related to operation above will be described in more detail.

The configuration related to the CORESET may be indicated based on the broadcast signaling. The configuration related to the CORESET may be one of the configurations defined in a table (e.g., a table related to the CORESET for Type0-PDCCH search space set). Each of the configurations may include i) the defined value, ii) the number of Resource Blocks (RBs) related to the frequency domain size (e.g., $N_{RB}^{CORESET}$), iii) the number of symbols (e.g., $N_{symb}^{CPRESET}$), and iv) an offset (e.g., offset (RBs)).

For example, the defined value may be determined based on puncturing related to the CORESET. The present embodiment may be based on Method #2. RBs constituting the CORESET may be obtained by the puncturing of one or more RBs among RBs based on the frequency domain size. The defined value may be a value based on a portion of the obtained RBs. A specific example related to the puncturing is as follows.

The RBs based on the frequency domain size may be 24 RBs (i.e., $N_{RB}^{CORESET} = 24$). The RBs constituting the CORESET may be 15 RBs obtained based on puncturing the 9 highest-numbered resource blocks among the 24 RBs.

For example, the defined value may be a value that is changed based on a time-varying unit. The present embodiment may be based on Method #3.

An initial value of the defined value may be determined based on the embodiments of Method #1 or Method #2 described above. Specifically, the initial value of the defined value may be i) a value configured based on broadcast signaling or ii) a value determined based on puncturing related to the CORESET.

The time-varying unit may be based on i) at least one slot or ii) a periodicity related to a search space.

For example, the configuration related to the CORESET may be determined by controlResourceSetZero included in the PDCCH-ConfigSIB1 parameter within the MIB. The controlResourceSetZero indicates one of the indices (e.g., 0 to 15) defined in the table.

For example, the number of RBs based on the channel bandwidth of 3 MHz may be 15.

For example, the number of RBs ($N_{RB}^{CORESET}$) related to the frequency domain size may be determined based on the configuration related to the CORESET. The number of RBs may be 12 or 24.

According to one embodiment, the CORESET may include 12 RBs based on the number of RBs being 12. The present embodiment may employ scheme #1.

According to one embodiment, based on the number of RBs being 24, the CORESET may include 15 RBs obtained based on puncturing 9 RBs among 24 RBs. The present embodiment may be based on Scheme #2.

The operations based on the steps S1410 and 1420 described above may be implemented by a device of FIG. 16. For example, a UE 200 may control one or more transceivers 230 and/or one or more memories 240 so as to perform the operations based on the steps S1410 and 1420.

Below, the above-described embodiments are described in detail from a perspective of base station operation.

Steps S1510 and 1520 described below correspond to the steps S1410 and 1420 described with reference to FIG. 14. Considering the above correspondence, redundant description is omitted. That is, the detailed description of the base station operation described below can be replaced with the description/embodiment of FIG. 14 corresponding to the base station operation.

FIG. 15 is a flowchart illustrating a method performed by a base station according to another embodiment of the present disclosure.

Referring to FIG. 15, a method performed by a base station according to another embodiment of the present disclosure includes transmitting an SS/PBCH block S1510 and transmitting a PDCCH S1520.

In the S1510 step, the base station transmits a Synchronization Signal/Physical Broadcast CHannel (SS/PBCH) block to the UE.

In the S1520 step, the base station transmits a Physical Downlink Control CHannel (PDCCH) to the UE based on a COntrol REsource SET (CORESET).

According to one embodiment, based on the frequency domain size of the CORESET, which is determined based on a configuration related to the CORESET, being related to a channel bandwidth smaller than 5 MHz, the CORESET may be obtained based on interleaved mapping. The shift value (e.g., $n_{shift}$) related to the interleaved mapping may be determined based on a defined value.

The operations based on the steps S1510 and S1520 described above may be implemented by a device of FIG. 16. For example, a base station 100 may control one or more transceivers 130 and/or one or more memories 140 so as to perform the operations based on the steps S1510 and S1520.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system). For example, PRACH, PUSCH, PUCCH or SRS may be replaced/changed with an uplink signal (or uplink channel) (e.g., first/second uplink signal). For example, SSB, CSI-RS, PDSCH, and PDCCH may be replaced/changed with a downlink signal (or downlink channel) (e.g., first/second downlink signal).

A device to which an embodiment of the present disclosure is applicable (a device implementing the method/operation according to an embodiment of the present disclosure) is described below with reference to FIG. 16.

FIG. 16 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may perform downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) comprising:

   receiving a Synchronization Signal/Physical Broadcast Channel (SS/PBCH) block; and
   receiving a Physical Downlink Control CHannel (PDCCH) based on a COntrol REsource Set (CORESET);
   wherein, based on a frequency domain size of the CORESET, which is determined based on a configuration related to the CORESET, being related to a channel bandwidth less than 5 MHz, the CORESET is obtained based on interleaved mapping,
   wherein a shift value related to the interleaved mapping is determined based on a defined value.

2. The method of claim 1, wherein the defined value is configured based on broadcast signaling.

3. The method of claim 2, wherein the configuration related to the CORESET is indicated based on the broadcast signaling, and

   the configuration related to the CORESET is one of configurations defined in a table,
   wherein each of the configurations includes i) the defined value, ii) the number of Resource Blocks (RBs) related to the frequency domain size, iii) the number of symbols, and iv) an offset.

4. The method of claim 1, wherein the defined value is determined based on puncturing related to the CORESET.

5. The method of claim 4, wherein Resource Blocks (RBs) forming the CORESET are obtained by the puncturing of one or more RBs among RBs based on the frequency domain size, and
   wherein the defined value is a value based on a portion of the obtained RBs.

6. The method of claim 1, wherein the defined value is a value that is changed based on a time-varying unit.

7. The method of claim 6, wherein an initial value of the defined value is i) a value set based on broadcast signaling or ii) a value determined based on puncturing related to the CORESET.

8. The method of claim 6, wherein the time-varying unit is based on i) at least one slot or ii) periodicity related to a search space.

9. The method of claim 1, wherein the shift value is determined as i) the defined value or ii) a value obtained by adding the defined value to a cell ID.

10. A user equipment (UE) comprising:

    one or more transceivers;
    one or more processors; and
    one or more memories connected to the one or more processors and storing instructions,

wherein the instructions, based on being executed by the one or more processors, configure the one or more processors to perform all steps of a method according to any one of claims 1 to 9.

11. A device comprising:

one or more memories; and
one or more processors operably connected to the one or more memories,
wherein the one or more memories store instructions that, based on being executed by the one or more processors, configure the one or more processors to perform all steps of a method according to any one of claims 1 to 9.

12. One or more non-transitory computer readable mediums storing instructions,
wherein the instructions executable by one or more processors configure the one or more processors to perform all steps of a method according to any one of claims 1 to 9.

13. A method performed by a base station comprising:

transmitting a Synchronization Signal/Physical Broadcast Channel (SS/PBCH) block; and
transmitting a Physical Downlink Control CHannel (PDCCH) based on a COntrol REsource Set (CORESET);
wherein, based on a frequency domain size of the CORESET, which is determined based on a configuration related to the CORESET, being related to a channel bandwidth less than 5 MHz, the CORESET is obtained based on interleaved mapping,
wherein a shift value related to the interleaved mapping is determined based on a defined value.

14. A base station comprising:

one or more transceivers;
one or more processors; and
one or more memories connected to the one or more processors and storing instructions,
wherein the instructions, based on being executed by the one or more processors, configure the one or more processors to perform all steps of a method according to claim 13.

【FIG. 1】

Radio Frame 10ms

Fixed Size

Subframe 1ms

| 0 | 1 | 2 | 3 | 4 | 5 | 6 | 7 | 8 | 9 |

Subframe ={1,2,4} Slots

Size depends on subcarrier spacing

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

【FIG. 2】

1 subframe = $14 \cdot 2^{\mu}$ OFDM symbols

$k = N^{size, \mu}_{grid} N^{RB}_{sc} - 1$

$N^{size, \mu}_{grid} N^{RB}_{sc}$ subcarriers

1 resource block = $N^{RB}_{sc}$ subcarriers

Resource element$(k, l)$

$k = 0$

$l = 0$

$l = 14 \cdot 2^{\mu} - 1$

【FIG. 3】

INITIAL CELL SEARCH | SYSTEM INFORMATION RECEPTION | RANDOM ACCESS PROCEDURE | GENERAL DL/UL Tx/Rx

PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH

S301  S302  S303  S304  S305  S306  S307  S308

· DL/UL ACK/NACK
· UE CQI/PMI RI REPORT USING PUSCH AND PUCCH

【FIG. 4】

Subcarrier Number

239
192
182
56
47
0

PBCH

PSS | PBCH | SSS | PBCH

PBCH

0  1  2  3

OFDM symbol number

【FIG. 5】

SSB periodicity(default:20ms)

```
┌──────┬────────────┬──────┬────────────────────┐
│ 5ms  │            │      │                    │
│window│            │░░░░░░│                    │
└──────┴────────────┴──────┴────────────────────┘
```

```
┌──────────────────────────────────────┐
│  ┌──────┐  ┌──────┐        ┌──────┐   │
│  │SSB#1 │  │SSB#2 │  · · · │SSB#L │   │
│  └──────┘  └──────┘        └──────┘   │
└──────────────────────────────────────┘
```

SSB burst set

【FIG. 6】

```
        ┌─────────────────────┐
        │      Power On        │
        └─────────────────────┘
                  │
                  ▼
   ┌─────────────────────────────────┐
   │        PSS/SSS reception         │────S610
   └─────────────────────────────────┘
                  │
                  ▼
   ┌─────────────────────────────────┐
   │         PBCH reception           │────S620
   └─────────────────────────────────┘
                  │
                  ▼
   ┌─────────────────────────────────┐
   │  SIB1-scheduling PDCCH reception │────S630
   └─────────────────────────────────┘
                  │
                  ▼
   ┌─────────────────────────────────┐
   │       SIB1 PDSCH reception        │────S640
   └─────────────────────────────────┘
                  │
                  ▼
     ┌───────────────────────────────┐
     │  Ready for PRACH transmission  │
     │      for initial access        │
     └───────────────────────────────┘
```

【FIG. 7】

【FIG. 8】

【FIG. 9】

(a)

PBCH

Not transmitted or punctured

PSS | PBCH | SSS | PBCH

Punctured PBCH | Channel BW

PBCH

frequency

Not transmitted or punctured

time

(b)

PBCH

Not transmitted or punctured

PSS | PBCH | SSS | PBCH

Punctured PBCH | Channel BW

PBCH

frequency

Not transmitted or punctured

time

【FIG. 10】

【FIG. 11】

subcarrier 0 of the
SS/PBCH block

$N_{CRB}^{SSB}$ → CRB#8

$k_{SSB} = 10$

subcarrier 0 in common
resource block $N_{CRB}^{SSB}$

offsetToPointA

CRB#0

Point A

【FIG. 12】

【FIG. 13】

Frequency

Time

【FIG. 14】

Start

Receive an SS/PBCH block — S1410

Receive a PDCCH — S1420

End

【FIG. 15】

```
                    ┌─────────┐
                    │  Start  │
                    └─────────┘
                         │
                         ▼
      ┌──────────────────────────────────────┐
      │     Transmit an SS/PBCH block         │────S1510
      └──────────────────────────────────────┘
                         │
                         ▼
      ┌──────────────────────────────────────┐
      │         Transmit a PDCCH              │────S1520
      └──────────────────────────────────────┘
                         │
                         ▼
                    ┌─────────┐
                    │   End   │
                    └─────────┘
```

【FIG. 16】

```
┌─────────────────────────────────┐     ┌─────────────────────────────────┐
│              100                │     │              200                │
│ ┌──────────┐   ┌──────────┐     │     │  ┌──────────┐   ┌──────────┐    │
│ │Processor │   │ Antenna  │     │     │  │ Antenna  │   │Processor │    │
│ │ (110)    │   │  Unit    │     │     │  │  Unit    │   │ (210)    │    │
│ │          │   │ (120)    │     │     │  │ (220)    │   │          │    │
│ │┌────────┐│   └──────────┘     │     │  └──────────┘   │┌────────┐│    │
│ ││Higher  ││                    │     │                 ││Higher  ││    │
│ ││Layer   ││                    │     │                 ││Layer   ││    │
│ ││Process.││   ┌──────────┐     │     │  ┌──────────┐   ││Process.││    │
│ ││Unit    ││   │Transceiver│   ╱│     │╱ │Transceiver│  ││Unit    ││    │
│ ││(111)   ││   │ (130)    │     │     │  │ (230)    │   ││(211)   ││    │
│ │└────────┘│   └──────────┘     │     │  └──────────┘   │└────────┘│    │
│ │┌────────┐│                    │     │                 │┌────────┐│    │
│ ││Physical││                    │     │                 ││Physical││    │
│ ││Layer   ││   ┌──────────┐     │     │  ┌──────────┐   ││Layer   ││    │
│ ││Process.││   │ Memory   │     │     │  │ Memory   │   ││Process.││    │
│ ││Unit    ││   │ (140)    │     │     │  │ (240)    │   ││Unit    ││    │
│ ││(115)   ││   └──────────┘     │     │  └──────────┘   ││(215)   ││    │
│ │└────────┘│                    │     │                 │└────────┘│    │
│ └──────────┘                    │     │                 └──────────┘    │
└─────────────────────────────────┘     └─────────────────────────────────┘
```

## INTERNATIONAL SEARCH REPORT

| International application No. |
| --- |
| **PCT/KR2024/011884** |

**A.     CLASSIFICATION OF SUBJECT MATTER**

**H04W 72/23**(2023.01)i; **H04W 72/0453**(2023.01)i; **H04W 48/10**(2009.01)i; **H04L 5/00**(2006.01)i

According to International Patent Classification (IPC) or to both national classification and IPC

**B.     FIELDS SEARCHED**

Minimum documentation searched (classification system followed by classification symbols)

H04W 72/23(2023.01); H04W 48/08(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SS/PBCH, CORESET, PDCCH, 5MHz channel BW, interleaved mapping, shift value, cycle shift, offset

**C.     DOCUMENTS CONSIDERED TO BE RELEVANT**

| Category* | Citation of document, with indication, where appropriate, of the relevant passages | Relevant to claim No. |
| --- | --- | --- |
| Y<br><br>A | KR 10-2020-0015526 A (LG ELECTRONICS INC.) 12 February 2020 (2020-02-12)<br>      See paragraphs [0267]-[0270]; claim 1; and figure 15. | 1,9-14<br><br>2-8 |
| Y | ERICSSON. Introduction of NR support for dedicated spectrum less than 5MHz for FR1. R1-2306311. 3GPP TSG-RAN WG1 Meeting #113. Incheon, Korea. 12 June 2023.<br>      See section 7.3.2.2. | 1,9-14 |
| A | SAMSUNG. Introduction of NR support for dedicated spectrum less than 5MHz for FR1. R1-2306288. 3GPP TSG RAN WG1 #113. Incheon, Korea. 12 June 2023.<br>      See section 13. | 1-14 |
| A | RAN1 et al. Reply LS on NR support for dedicated spectrum less than 5 MHz for FR1. R4-2311035, 3GPP TSG-RAN WG4 Meeting #108. Toulouse, France. 07 August 2023.<br>      See section 1. | 1-14 |
| A | KR 10-2020-0091849 A (SAMSUNG ELECTRONICS CO., LTD.) 31 July 2020 (2020-07-31)<br>      See paragraphs [0245]-[0271]; and figures 11-12. | 1-14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 November 2024** | **27 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011884**

| Patent document cited in search report | | | Publication date (day/month/year) | Patent family member(s) | | | Publication date (day/month/year) |
|---|---|---|---|---|---|---|---|
| KR | 10-2020-0015526 | A | 12 February 2020 | CN | 111096029 | A | 01 May 2020 |
| | | | | CN | 111096029 | B | 08 August 2023 |
| | | | | EP | 3651525 | A1 | 13 May 2020 |
| | | | | EP | 3651525 | A4 | 11 November 2020 |
| | | | | EP | 3651525 | B1 | 24 November 2021 |
| | | | | EP | 3972183 | A1 | 23 March 2022 |
| | | | | EP | 3972183 | B1 | 17 May 2023 |
| | | | | JP | 2020-532890 | A | 12 November 2020 |
| | | | | JP | 2022-050536 | A | 30 March 2022 |
| | | | | JP | 7007454 | B2 | 24 January 2022 |
| | | | | JP | 7441247 | B2 | 29 February 2024 |
| | | | | KR | 10-2192825 | B1 | 18 December 2020 |
| | | | | US | 11018825 | B2 | 25 May 2021 |
| | | | | US | 11804933 | B2 | 31 October 2023 |
| | | | | US | 12095689 | B2 | 17 September 2024 |
| | | | | US | 2020-0266950 | A1 | 20 August 2020 |
| | | | | US | 2021-0211256 | A1 | 08 July 2021 |
| | | | | US | 2021-0288776 | A1 | 16 September 2021 |
| | | | | WO | 2020-027472 | A1 | 06 February 2020 |
| KR | 10-2020-0091849 | A | 31 July 2020 | CN | 111492703 | A | 04 August 2020 |
| | | | | CN | 111492703 | B | 27 June 2023 |
| | | | | CN | 116684955 | A | 01 September 2023 |
| | | | | EP | 3711390 | A1 | 23 September 2020 |
| | | | | EP | 3711390 | A4 | 16 December 2020 |
| | | | | JP | 2021-508201 | A | 25 February 2021 |
| | | | | JP | 2023-078230 | A | 06 June 2023 |
| | | | | JP | 7242676 | B2 | 20 March 2023 |
| | | | | KR | 10-2667244 | B1 | 21 May 2024 |
| | | | | US | 11070333 | B2 | 20 July 2021 |
| | | | | US | 11552761 | B2 | 10 January 2023 |
| | | | | US | 2019-0200307 | A1 | 27 June 2019 |
| | | | | US | 2021-0344470 | A1 | 04 November 2021 |
| | | | | WO | 2019-125063 | A1 | 27 June 2019 |
| | | | | WO | 2019-125063 | A9 | 16 April 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical channels and modulation. *3GPP TS 38.211*
- Multiplexing and channel coding. *3GPP TS 38.212*
- Physical layer procedures for control. *3GPP TS 38.213*
- Physical layer procedures for data. *3GPP TS 38.214*
- Physical layer measurements. *3GPP TS 38.215*
- NR and NG-RAN Overall Description. *3GPP TS 38.300*
- User Equipment (UE) procedures in idle mode and in RRC inactive state. *3GPP TS 38.304*
- Medium Access Control (MAC) protocol. *3GPP TS 38.321*
- Radio Link Control (RLC) protocol. *3GPP TS 38.322*
- Packet Data Convergence Protocol (PDCP). *3GPP TS 38.323*
- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*
- Application layer support for V2X services; Functional architecture and information flows. *3GPP TS 23.287*
- System Architecture for the 5G System. *3GPP TS 23.501*
- Procedures for the 5G System. *3GPP TS 23.502*
- Policy and Charging Control Framework for the 5G System; Stage 2. *3GPP TS 23.503*
- Non-Access-Stratum (NAS) protocol for 5G System (5GS); Stage 3. *3GPP TS 24.501*
- Access to the 3GPP 5G Core Network (5GCN) via non-3GPP access networks. *3GPP TS 24.502*
- User Equipment (UE) policies for 5G System (5GS); Stage 3. *3GPP TS 24.526*